Europäisches Patentamt

European Patent Office

Office européen des brevets

(19)

(11) Publication number: **0 400 492**
**A2**

# (12) EUROPEAN PATENT APPLICATION

(21) Application number: **90109945.7**

(22) Date of filing: **25.05.90**

(51) Int. Cl.⁵: **B29C 45/14, B29C 45/16,**
**//B29L31:50**

(30) Priority: **30.05.89 IT 8255189**

(43) Date of publication of application:
**05.12.90 Bulletin 90/49**

(84) Designated Contracting States:
**AT BE CH DE DK ES FR GB IT LI NL**

(71) Applicant: **RIKO SPORT s.r.l.**
**Via Schiavonesca 89**
**I-31030 Caselle D'Altivole (TV)(IT)**

(72) Inventor: **Soligo, Maurizio**
**Via III Armata 46**
**I-31050 Barcon Di Vedelago (Treviso)(IT)**

(74) Representative: **Vannini, Torquato et al**
**JACOBACCI-CASETTA & PERANI S.p.A. Via**
**Berchet, 9**
**I-35131 Padova(IT)**

(54) A method of making plastics shoe soles in at least two colors.

(57) By injecting a first plastics material directly over a shoe upper (19) fitted on a plug (18) and clamped between two mold halves (10,11), one (or more) island(s) (21) is formed in a first color. By injecting a second plastics material directly over the shoe upper (19) and the islands (21), the sole (23) is formed in a second color.

FIG.4

EP 0 400 492 A2

This invention relates to a method of molding, from a suitable plastics material, shoe soles in at least two colors and incorporating reinforcing elements or "islands" and particularly, but not exclusively, intended for sporting footwear.

More particularly, the invention concerns a method as above which is based on a technique referred to as of direct injection over uppers of the plastics material selected, such as in particular polyurethane.

The invention also relates to a molding unit for implementing said method.

It is a known fact that footwear for sporting activities are currently enjoying widespread popularity, which have soles of the so-called two-color type because formed from plastics materials in different colors, or more generally different color hues, and have different strength and flex characteristics.

For such soles, a first plastics material, or briefly, a first color, is used to make functional and/or styling reinforcement elements which are applied to the uppers and only span certain limited areas of the projected sole. (It is for this reason that such elements are called "islands" in the specific language.) A second plastics material, or briefly, a second color, is then used for making the sole proper, which sole is formed by direct injection of the plastics over the uppers and the islands associated therewith.

Also known is that the use of a third color is gaining acceptance for making the so-called tread portion of the sole.

According to current practice, the process of manufacturing two-color soles of the kind under consideration provides for the islands to be made in a separate step, their application, usually by hand, to uppers set on a respective plug or shoe tree, and finally direct injection of the second color over the uppers and their islands, with the plug that holds them clamped between the mold halves of a molding unit.

This prior manufacturing technique is beset with the well recognized drawbacks of any production cycles wherein one or more of the steps are carried out manually, in particular uneven quality of the finished product, limited throughput, and a non-negligible amount of rejects.

The problem that underlies this invention is to provide a method of making soles with at least two different color hues, whereby the need for first preparing and then applying by hand the islands to the uppers can be eliminated, and the above-noted drawbacks of the prior art obviated.

This problem is solved according to the invention by a method having the characteristics set forth in Claim 1.

The advantages and features of the method of this invention will be more clearly understood from the following detailed description of an exemplary embodiment thereof, to be read in connection with the accompanying illustrative and non-limitative drawings, where:

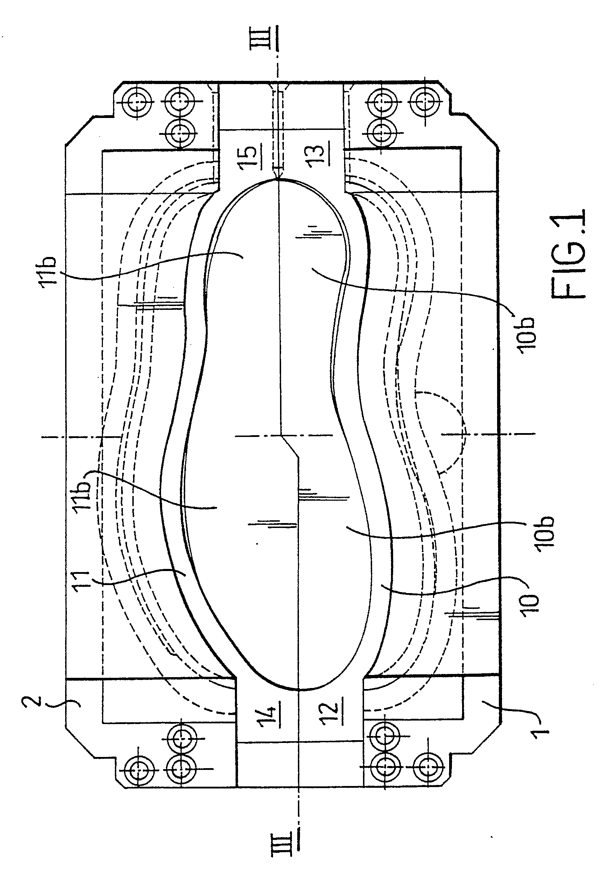

Figure 1 is a top plan view showing schematically a molding unit for implementing the method of this invention;

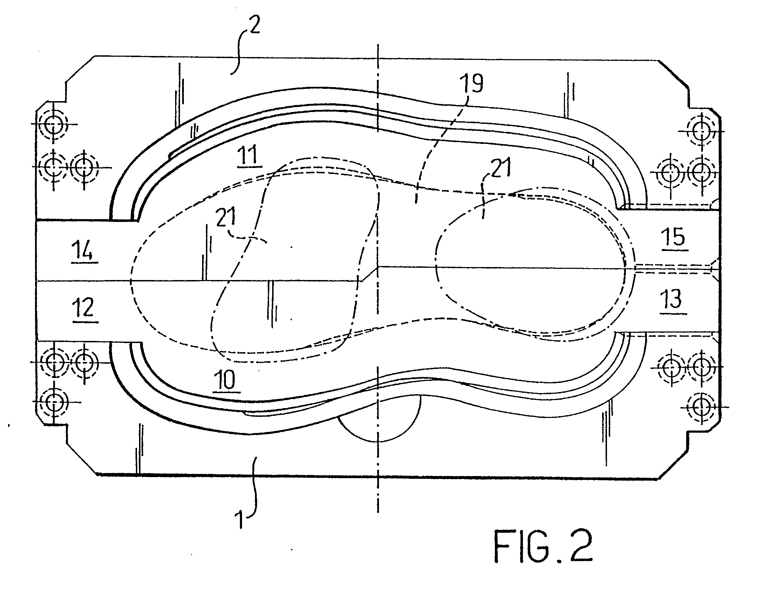

Figure 2 is a bottom plan view showing schematically the same molding unit as in Figure 1;

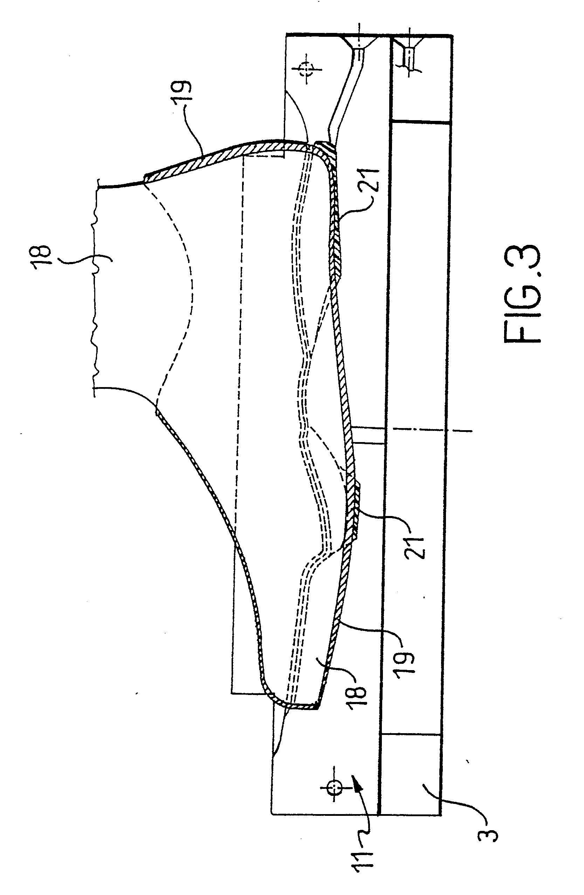

Figure 3 is a sectional view taken along the line III-III in Figure 1;

Figures 4 and 5 show in cross-section the same molding unit as in Figure 1, at two successive stages of its operation; and

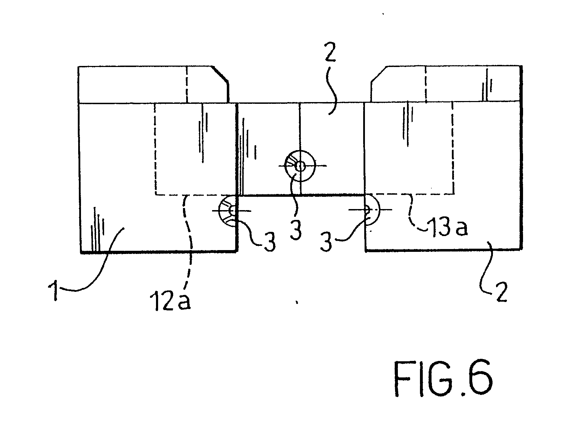

Figure 6 is a rear side view of the molding unit shown in Figure 1.

With reference to the drawing views, a molding unit for implementing the method of this invention comprises a first pair of mold halves 1 and 2 removably mounted on a support structure, known per se and not illustrated, wherein they are guided toward each other to form a first mold or outer mold.

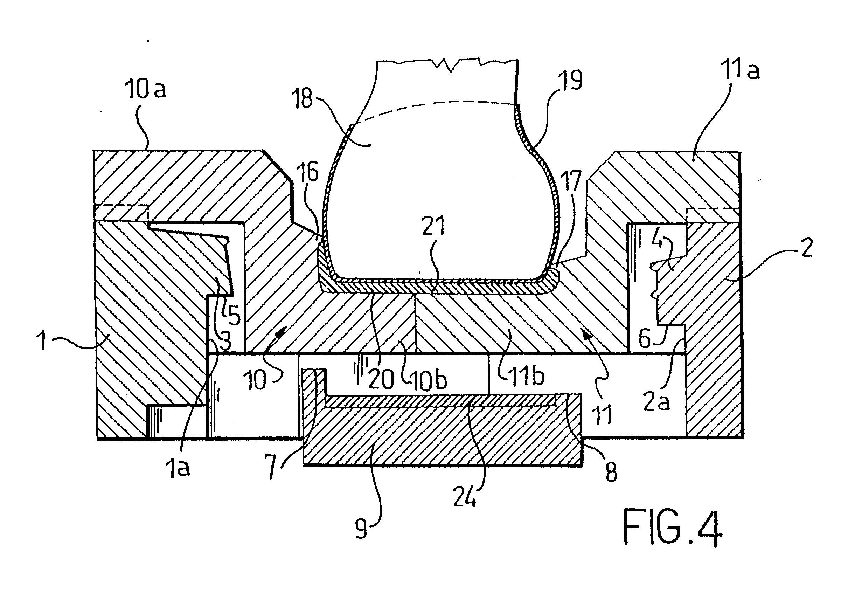

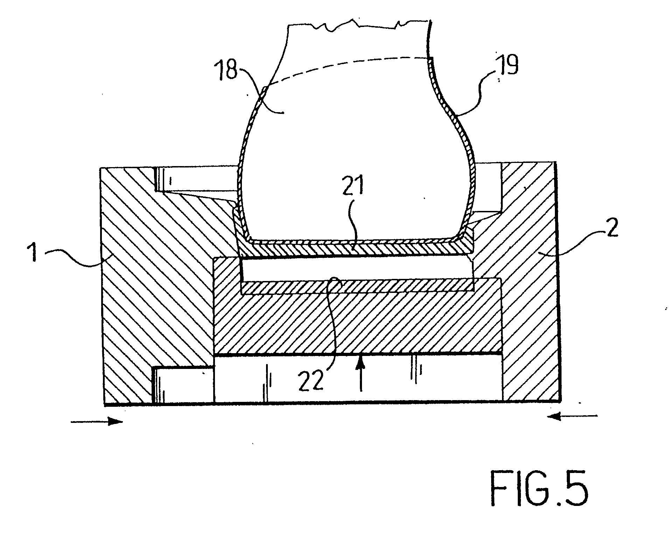

Formed on the interior walls 1a and 2a, facing each other, of the mold halves 1 and 2 are respective portions 3, 4 jutting out so as to span the full length of the mold halves. These portions 3, 4 define, on the walls 1a and 2a, respective shoulders 5, 6 (Figures 4, 5) with which the top edges 7, 8 of a piston 9, also removably mounted on said support structure, cooperate to make a sole, specifically the second sole color, as explained hereinafter. The piston 9 is guided and driven in a conventional way, not illustrated.

The molding unit of this invention comprises a second pair of mold halves 10, 11 mounted removably between the mold halves 1 and 2, with which they are respectively associated and adapted to cooperate so as to provide a second mold or inner mold.

In particular, the mold halves 10 and 11 have substantially right Z- and inverted Z-like cross-sectional shapes, respectively, with the upper legs 10a, 11a resting onto the mold halves 1 and 2 and the lower legs 10b and 11b extending toward each other to provide the "bottom" of the second mold within the first mold (Figure 4). Said mold halves 10, 11, moreover, are provided with respective parallelepipedic lugs 12, 13 and 14, 15 at their opposed ends which are adapted to rest on corresponding abutments 12a, 13a and 14a, 15a formed on the opposed ends of the mold halves 1 and 2.

On the inner walls of the mold halves 10 and 11, there are formed or otherwise secured projections 16, 17 which span the full length of the mold halves at such a height level that, with the mold halves 10, 11 positioned in the first mold, said projections 16, 17 become concentric with the jutting portions 3, 4 of the mold halves 1 and 2. Thus, the "working position" or molding chamber defined by the first mold and that defined by the second mold will be at the same height level, as explained hereinafter.

The method of making soles in two or more colors, according to this invention, by means of the molding unit just described, is the following.

Under a starting condition, the first mold and the second mold, inserted into the first and supported thereby, will be in inoperative positions, that is with their mold halves removed from each other.

A plug 18 over which an upper 19 has been fitted, is lowered into the working position between the mold halves 10, 11 held apart. Thereafter, the pairs of mold halves 1-10 and 2-11 are moved toward each other until the mold halves 10 and 11 close around the plug 18 and its upper 19, with which they will form one or more cavities or chambers 20 (Figure 4) having selected shapes and sizes in relation to the shapes and sizes of the islands 21 to be provided in the sole being made. These islands 21 are obtained by injecting plastics material, specifically polyurethane, into the cavity (cavities) 20 directly over the upper 19.

After curing, the mold pairs 1-10 and 2-11 are moved mutually apart, thereby opening the inner mold. The plug 18 and its associated upper 19 and islands 21 are then lifted out of the opened molds.

The mold halves 10, 11 are presently removed, away from the mold halves 1 and 2. The plug 18 is moved back into the previously considered (level) working position, and the mold halves 1 and 2 of the outer mold are closed around it while raising the piston 9 (Figure 5). Under this condition, between the plug 18 and the mold halves 1 and 2, on the one side, and the piston 9, on the other, there will be defined a chamber 22 whereinto the plastics (specifically polyurethane) is injected directly over the upper 19 and islands 21 associated therewith, to provide a sole 23 (second color).

On the piston 9 there may be present the so-called tread (or third color) to be obtained by a conventional technique and bonded to the previously formed sole 23.

## Claims

1. A method of making soles having at least two colors and incorporating reinforcement elements or islands, characterized in that it comprises the sequential steps of:
moving into a working position, between two opened mold halves (10-11), a plug (18) whereto a respective upper (19) has been fitted,

closing said mold halves (10,11) therearound to define at least one cavity (20) having a shape and size related to those of a corresponding reinforcement element or island (21) to be made,
injecting a plastics material into said cavity (20) directly over the upper (19) to produce a corresponding reinforcement element (21) or first color,
opening the mold halves (10-11) and lifting out the plug (18) with its respective upper (19) and said at least one reinforcement element or island (21) associated therewith,
removing the mold halves (10 and 11) and returning the plug (18) and respective upper (9) and said at least one reinforcement element back to said working position,
closing, around said plug, a further pair of mold halves (1,2) to define a chamber (22) of a size related to the sole to be produced, and
injecting plastics into said chamber (22) directly over the upper (19) and respective islands (21) to obtain said sole (23) or second color.

2. A method according to Claim 1, characterized in that said mold halves (10-11) are associated internally with said further mold halves (1 and 2) whereby they are moved to open and close.

3. A molding unit for implementing the method of Claims 1 and 2, comprising a plug (18) for an upper (19) and a pair of mold halves (1,2) movable toward each other so as to close in a working position around said plug and away from each other to an inoperative position, characterized in that it comprises a further pair of mold halves (10,11) mounted removably between said mold halves (1 and 2) wherewith they are respectively associated such that they can be closed around said plug (18) held in the same operating position and moved away from said plug, the inner walls of said further mold halves (10 or 11) defining with said plug (18) at least one chamber (20) whose size is selected to relate to that of a corresponding reinforcement element or island (21) to be formed.

4. A molding unit according to Claim 3, characterized in that said further mold halves (10 and 11) have substantially right Z-and inverted Z-like cross-sectional shapes, respectively, with upper legs (10a,11a) arranged to rest on the mold halves (1,2) and lower legs arranged to extend toward each other so as to form, in the working position, the bottom of said at least one molding chamber (20) for a corresponding island (21).

FIG.1

FIG.2

FIG.3

EP 0 400 492 A2

FIG.4

EP 0 400 492 A2

FIG.5

EP 0 400 492 A2

FIG.6